# EUROPÄISCHE PATENTSCHRIFT

(11) **EP 3 520 167 B1**
(45) Veröffentlichungstag und Bekanntmachung des Hinweises auf die Patenterteilung: **19.08.2020**
(21) Anmeldenummer: 17754727.0
(22) Anmeldetag: 24.08.2017
(51) Int. Cl.: H01M 12/06, H01M 2/02, H01M 2/04, H01M 2/08, H01M 4/24

(54) **ZINK/LUFT-KNOPFZELLE**
ZINC/AIR BUTTON CELL
PILE-BOUTON ZINC/AIR

(30) Priorität: 27.09.2016 EP 16190827
(43) Veröffentlichungstag der Anmeldung: 07.08.2019
(73) Patentinhaber: VARTA Microbattery GmbH, 73479 Ellwangen Jagst (DE)
(72) Erfinder: BRENNER, Rolf, 73479 Ellwangen (DE)
(74) Vertreter: Patentanwaltskanzlei Cartagena
(86) Internationale Anmeldenummer: PCT/EP2017/071369
(87) Internationale Veröffentlichungsnummer: WO 2018/059845

(56) Entgegenhaltungen:
- EP-A2- 0 940 870
- WO-A2-2009/142708
- WO-A2-2010/107679
- CN-A- 101 931 099

## Beschreibung

Die nachfolgend beschriebene Erfindung betrifft Zink/Luft-Knopfzellen.

Eine besonders bekannte Ausführungsform einer elektrochemischen Zelle ist die Knopfzelle. Eine Knopfzelle weist üblicherweise ein zylindrisches Gehäuse auf, dessen Höhe kleiner als sein Durchmesser ist und das eine positive und eine negative Elektrode einschließt.

Das Gehäuse von Knopfzellen besteht in aller Regel aus zwei Gehäusehalbteilen, dem Zellenbecher und dem Zellendeckel, zwischen denen eine elektrisch isolierende Dichtung angeordnet ist. In der Regel steht der Zellenbecher in elektrischer Verbindung mit der positiven Elektrode und ist entsprechend positiv gepolt. Der Zellendeckel steht üblicherweise in elektrischer Verbindung mit der negativen Elektrode und ist entsprechend negativ gepolt. Die Dichtung soll einen elektrischen Kontakt zwischen den entgegengesetzt gepolten Gehäusehalbteilen unterbinden. Darüber hinaus soll sie einem Entweichen und auch einem Eindringen von Flüssigkeit oder Feuchtigkeit aus dem oder in das Gehäuse entgegenwirken.

In dem Gehäuse können unterschiedliche elektrochemische Systeme enthalten sein. Sehr verbreitet sind Knopfzellen auf Basis von Zink/Luft, Zink/MnO2 und Nickel/Zink. Auch sekundäre Systeme, z.B. auf Basis von Nickel/Metallhydrid, Nickel/Cadmium oder auf Basis von Lithium, sind sehr verbreitet.

Zink/Luft-Knopfzellen werden vor allem in Hörgeräten eingesetzt. Zink/Luft-Knopfzellen zeichnen sich - bezogen auf ihr Volumen - durch eine hohe spezifische Energieausbeute aus. Aufgrund des hohen Energiebedarfes von Hörgeräten bedarf es dennoch typischerweise wöchentlich eines Batteriewechsels. Die hohe Wechselfrequenz der Zellen bedeutet, dass sich auch kleinere Kapazitätserhöhungen vergleichsweise deutlich in der Laufzeit widerspiegeln und einen Wettbewerbsvorteil ausmachen.

Beispiele für Zink/Luft-Knopfzellen finden sich in der EP 0940870 A2, der WO 2009/142708 A2, der WO 2010/107679 A2 und der CN 101931099 A.

Das äußere Volumen und das Form-Profil von Zink/Luft-Knopfzellen sind in einschlägigen IEC-Normen festgelegt. Somit können Zink/Luft-Knopfzellen nicht beliebig in ihren äußeren Abmessungen verändert, insbesondere nicht einfach vergrößert werden. Kapazitätserhöhungen können bei Zink/Luft-Knopfzellen nur erreicht werden, indem der Volumenanteil an passiven Zell-komponenten so gering wie möglich gehalten und damit das nutzbare Volumen für den Energieträger Zink erhöht wird.

Der vorliegenden Erfindung lag die Aufgabe zugrunde, Zink/Luft-Knopfzellen mit erhöhter Kapazität bereitzustellen.

Die gestellte Aufgabe wird durch Zink/Luft-Knopfzellen mit den Merkmalen des Anspruchs 1 gelöst. Bevorzugte Ausführungsformen des erfindungsgemäßen Halbzeugs sind in den abhängigen Ansprüchen 2 bis 4 angegeben. Der Wortlaut sämtlicher Ansprüche wird hiermit durch Bezugnahme zum Inhalt der vorliegenden Beschreibung gemacht.

Zink/Luft-Knopfzellen gemäß der vorliegenden Erfindung umfassen wie auch alle klassischen Zink/Luft-Knopfzellen ein flüssigkeitsdicht verschlossenes Gehäuse aus einem Zellenbecher, einem Zellendeckel, und einer Dichtung, welche einen Innenraum umschließen, in dem, getrennt durch einen Separator, eine Zink-Anode und eine Luft-Kathode angeordnet sind. Hierbei weisen
- der Zellenbecher einen Boden, einen hohlzylindrischen Mantelbereich, einen den Boden und den Mantelbereich verbindenden Übergangsbereich und einen ringförmigen, eine Öffnung definierenden Randbereich auf,
- der Boden, der Mantelbereich, der Randbereich und der Übergangsbereich des Zellenbechers jeweils eine in den Innenraum weisende Innenseite und eine in die entgegengesetzte Richtung weisende Außenseite auf,
- der Zellendeckel einen Boden, einen ringförmigen Randbereich und einen den Boden und den Randbereich verbindenden Übergangsbereich auf, und
- der Boden, der Randbereich und der Übergangsbereich des Zellendeckels jeweils eine in den Innenraum weisende Innenseite und eine in die entgegengesetzte Richtung weisende Außenseite auf.

Die Zink-Anode besteht im Wesentlichen aus Zink-Partikeln oder Partikeln aus einer Zink-Legierung. Des Weiteren kann die Zink-Anode z.B. einen Elektrodenbinder und ein oder mehrere Additive, beispielsweise einen Gasungsinhibitor, enthalten.

Besonders bevorzugt sind die Zink-Anode und damit auch die Zink/Luft-Knopfzellen gemäß der vorliegenden Erfindungfrei von Quecksilber.

Als Luftkathode kommt bevorzugt eine Gasdiffusionselektrode zum Einsatz. Gasdiffusionselektroden sind Elektroden, in denen die an der elektrochemischen Reaktion beteiligten Stoffe (in der Regel ein Katalysator, ein Elektrolyt und Luftsauerstoff) nebeneinander in fester, flüssiger und gasförmiger Form vorliegen und miteinander in Kontakt treten können. Der Katalysator katalysiert die Reduktion des Luftsauerstoffs bei der Entladung und gegebenenfalls auch die Oxidation von Hydroxidionen bei der Ladung derZellen.

Besonders bevorzugt kommen als Luftkathoden kunststoffgebundene Gasdiffusionselektroden zum Einsatz. Solche Gasdiffusionselektroden sind beispielsweise in der DE 3722019 A1 beschrieben. In solchen Elektroden bildet ein Kunststoffbinder (z.B. Polytetrafluorethylen, kurz PTFE) eine poröse Matrix aus, in die Partikel aus einem elektrokatalytisch aktiven Material (zum Beispiel aus einem Edelmetall wie Platin oder Palladium oder aus einem Manganoxid) eingebettet sind. Diese müssen die erwähnte Umsetzung von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, zum Beispiel ein Netz aus Silber, Nickel oder versilbertem Nickel, eingewalzt werden. Das Metallnetz bildet eine Ableiterstruktur innerhalb der Elektrode und dient als Stromableiter.

Bei dem Separator kann es sich beispielsweise um eine poröse Kunststofffolie oder um ein Kunststoffvlies handeln.

Die Elektrode und der Separator sind in aller Regel mit einem wässrigen, alkalischen Elektrolyten, beispielsweise mit Kalilauge, getränkt.

Der Zellenbecher und der Zellendeckel sind bevorzugt aus metallischen Materialien wie vernickeltem Stahl oder Blech gefertigt. Weiterhin geeignet sind insbesondere auch Trimetalle, beispielsweise mit der Abfolge Nickel, Stahl und Kupfer (von außen nach innen).

Bei der Dichtung handelt es sich bevorzugt um eine durch Spritzguss gefertigte Dichtung. Bevorzugt besteht die Dichtung aus einem Thermoplasten wie beispielsweise Polyamid (PA).

Der Boden des Zellenbechers weist mindestens eine Durchbrechung auf, durch die Luftsauerstoff in den Innenraum des Gehäuses eindringen kann. Bevorzugt weist der Boden zwei bis vier solcher Durchbrechungen auf.

Auf der Innenseite des Bodens des Zellenbechers sind die Luftkathode und der Separator in Form von dünnen Schichten, beispielsweise jeweils mit Dicken im Bereich von 10 µm bis 1000 µm, bevorzugt jeweils im Bereich von 10 µm bis 500 µm, angeordnet. Die Luftkathode und der Separator sind bevorzugt scheibenförmig, insbesondere als kreisrunde Scheiben, ausgebildet.

Bevorzugt liegen die Ränder von Luftkathode und/oder Separator an der Innenseite des hohlzylindrischen Mantelbereichs des Zellenbechers an.

Bei der Luftkathode und dem Separator kann es sich um separate Schichten oder Scheiben handeln, die übereinander gelegt sind. Es können aber auch Schichtverbünde umfassend die Luftkathode und den Separator verwendet werden, wie sie etwa in der WO 2012/139933 A1 beschrieben sind.

Zwischen dem Boden des Zellenbechers und der Luftkathode kann gegebenenfalls ein Luftverteiler wie etwa ein poröses Vlies angeordnet sein.

Erfindungsgemäße Zink/Luft-Knopfzellen zeichnen sich insbesondere durch eine neuartige Ausgestaltung der Dichtung zwischen Zellenbecher und Zellendeckel aus.

Die Dichtung umfasst einen hohlzylindrischen Mantel, der an der Innenseite des Mantelbereichs des Zellenbechers anliegt und stirnseitig durch einen oberen, vom Boden des Zellenbechers wegweisenden ringförmigen Dichtungsrand und einen unteren, in Richtung des Bodens weisenden ringförmigen Dichtungsrand begrenzt wird, wobei der obere ringförmige Dichtungsrand einen ringförmigen Spalt aufweist.

Es ist bevorzugt, dass der untere Dichtungsrand auf dem Boden des Zellenbechers oder auf dem Separator aufsitzt.

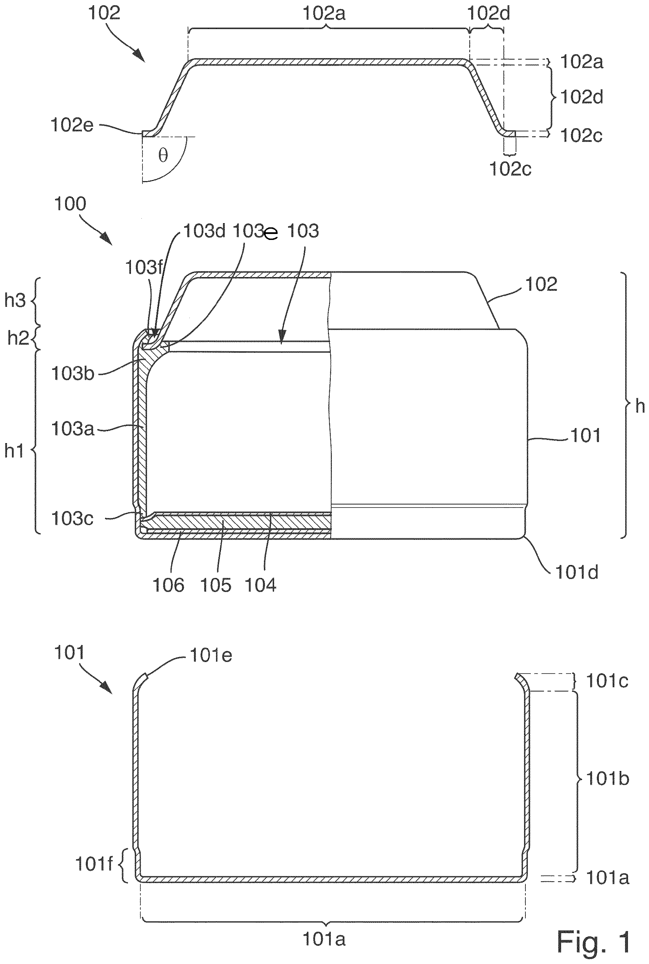

Der Zellendeckel ist einschließlich seines Randbereichs einwandig ausgebildet. Hierunter soll insbesondere verstanden werden, dass der Zellenbecher keinen durch Umschlagen gebildeten doppelwandigen Rand aufweist, wie etwa der in Fig. 1 und 2 der JP 2002-373711 A dargestellte Rand des Zellendeckels 3, der einen axial ausgerichteten, um einen Winkel von 180° umgeschlagenen endständigen Abschnitt aufweist.

Der einwandig ausgebildete Randbereich umfasst eine endständige Schnittkante und ist radial nach außen umgebogen, so dass der Randbereich einen freistehenden, kreisringförmigen Bereich radialer Erstreckung bildet, dessen äußerer Rand von der Schnittkante gebildet wird.

Bevorzugt ist der kreisringförmige Bereich planar ausgebildet. Besonders bevorzugt schließt dieser planare Bereich mit dem hohlzylindrischen Mantelbereich des Zellenbechers einen Winkel Θ von 90° ± 10° ein.

Der Randbereich des Zellendeckels ist in den ringförmigen Spalt des oberen Dichtungsrands eingeschoben. Zum Verschluss der Zelle ist der Randbereich des Zellenbechers radial nach innen umgebogen.

Die Böden von Zellenbecher und Zellendeckel weisen in der Regel eine kreisrunde Geometrie auf.

Die sich an die Böden von Zellenbecher und Zellendeckel anschließenden Übergangsbereiche umfassen bevorzugt die Teile von Zellenbecher und Zellendeckel, die außerhalb der Ebene des jeweiligen Bodens liegen, zumindest im Falle des Zellenbechers aber noch nicht Teil des dazugehörigen Mantelbereichs sind. Die Übergangsbereiche können abgerundet ausgebildet sein, beispielsweise schulterförmig, oder auch die Form einer scharfen Kante haben.

Es ist bevorzugt, dass der hohlzylindrische Mantelbereich des Zellenbechers axial auf einer Seite durch den Übergangsbereich zum Boden des Zellenbechers und auf der anderen Seite durch den radial nach innen gebogenen Randbereich des Zellenbechers begrenzt wird.

In bevorzugten Ausführungsformen dominiert der hohlzylindrische Mantelbereich die Form der Zelle, dessen Gehäuse entsprechend eine im Wesentlichen zylindrische Geometrie aufweist.

In besonders bevorzugten Ausführungsformen weist die erfindungsgemäße Zelle die folgenden Merkmale auf:
- Der Boden des Zellenbechers ist parallel zum Boden des Zellendeckels ausgerichtet,
- Der kürzeste Abstand zwischen einem Punkt auf der Außenseite des Bodens des Zellendeckels und einem Punkt auf der Außenseite des Bodens des Zellenbechers definiert die Höhe der Zelle,
- Der größtmögliche Abstand zwischen zwei Punkten auf der Außenseite des hohlzylindrischen Mantelbereichs des Zellenbechers definiert den Durchmesser der Zelle, und
- Das Verhältnis von Höhe : Durchmesser der Zelle ist ≤ 1.

In axialer Richtung ist der Teil des Gehäuses zwischen den Böden von Zellenbecher und Zellendeckel in zwei ringförmige, endständige, einwandige Segmente und ein zwischen diesen angeordnetes mittleres, ringförmiges, doppelwandiges Segment unterteilt. Das doppelwandige Segment wird dadurch gebildet, dass die Randbereiche von Zellenbecher und Zellendeckel überlappen.

Erfindungsgemäß entfallen dabei weniger als 20 %, bevorzugt weniger als 15 %, besonders bevorzugt weniger als 10 %, der Höhe der Zelle auf das doppelwandige Segment. Mit anderen Worten: Das doppelwandige Segment trägt weniger als 20%, bevorzugt weniger als 15 %, besonders bevorzugt weniger als 10 %, zur Höhe der Zelle bei.

Der untere Dichtungsrand kann entweder unmittelbar auf dem Boden des Zellenbechers aufsitzen oder aber beispielsweise auf einem Stützring, der unmittelbar auf dem Boden des Zellenbechers aufliegt, oder aber unmittelbar auf dem Separator.

Die beschriebene Ausgestaltung der Dichtung mit dem ringförmigen Spalt am oberen Dichtungsrand erlaubt es, dass der Deckel am oberen Ende der Dichtung aufgenommen wird und nicht mehr am unteren Ende. Klassisch sind bei Zink/Luft-Knopfzellen sowohl die Dichtung als auch der Zellendeckel bis in den Bereich des Bodens des Zellenbechers hinuntergezogen. Die Zellendeckel von klassischen Zink/Luft-Knopfzellen müssen daher deutlich höher sein als bei erfindungsgemäßen Zellen. Oder von der anderen Seite betrachtet, Zellen gemäß der vorliegenden Erfindung benötigen gegenüber klassischen Zellen verkürzte Zellendeckel von vergleichsweise geringer Bauhöhe.

Beispielhaft sei in diesem Zusammenhang auf Fig. 2 der DE 3314624 A1 verwiesen. Wie hier zu erkennen ist, ergibt sich aus diesem klassischen Design ein doppelwandiger Mantelbereich, was unvermeidlich mit einem geringeren Innenvolumen einhergeht. Des Weiteren ist die potentielle Kontaktfläche zwischen der Anode und dem Zellendeckel maximiert, was zwar auf den ersten Blick vorteilhaft erscheint, jedoch gerade im Hinblick auf die neue, quecksilberfreie Generation von Zink/Luft-Knopfzellen problematisch sein kann.

Zellendeckel von Knopfzellen werden in der Regel als Stanzziehteile aus mehrlagigen Metallsubstraten hergestellt. Ein solches Metallsubstrat weist meist eine zentrale Schicht aus einem Stahlblech auf, das auf einer Seite beispielsweise mit Kupfer oder einer Kupferlegierung und auf der anderen Seite mit Nickel beschichtet ist. Im fertigen Zellendeckel bildet die Kupfer- bzw. die Kupferlegierungsschicht die Innenseite. Sie dient dem Zweck, einen unmittelbaren Kontakt des Elektrolyten mit der Stahlblechschicht zu vermeiden, da sich sonst Wasserstoff bilden würde. Bereits kleinste Beschädigungen der Kupferschicht können allerdings zu einer solchen unerwünschten Gasung innerhalb der Zelle führen. Eine Maximierung der Innenoberfläche des Zellendeckels erhöht somit indirekt auch die Wahrscheinlichkeit, dass eine unerwünschte Gasung auftritt.

Ein weiteres Problem: An der Schnittkante des Zellendeckels liegt die Stahlblechschicht offen. Bei einem unmittelbaren Kontakt des Elektrolyten mit der Stahlblechschicht kann es insbesondere hier leicht zu einer Gasung kommen. Bei erfindungsgemäßen Zink/Luft-Knopfzellen befindet sich die Schnittkante des Zellendeckels dagegen in einem vergleichsweise unkritischen Bereich. Erfindungsgemäße Zink/Luft-Knopfzellen weisen daher eine vergleichsweise geringe Gasungsanfälligkeit auf.

Bei erfindungsgemäßen Zink/Luft-Knopfzellen wird eine Doppelwandigkeit vermieden, abgesehen von der unvermeidlichen Überlappung der ringförmigen Randbereiche von Zellenbecher und Zellendeckel. Bei Tests konnte hierdurch eine erhebliche Volumensteigerung von bis zu 6,4 % erzielt werden. Darüber hinaus ist die Neigung erfindungsgemäßer Zellen zu der erwähnten unerwünschten Gasung deutlich verringert. Weiterhin ermöglichst es die Verwendung von verkürzten Zellendeckeln bis zu 30 % Gehäusematerial einzusparen.

In besonders bevorzugten Ausführungsformen umfasst dass der obere Dichtungsrand eine ringförmige innere und eine ringförmige äußere Dichtlippe, welche den ringförmigen Spalt einschließen.

Weiterhin ist es bevorzugt, dass die ringförmige äußere Dichtlippe von dem radial nach innen gebogenen Randbereich des Zellenbechers auf den Randbereich des Zellendeckels gedrückt wird.

Es kann bevorzugt sein, dass der Zellendeckel einen hohlzylindrischen Mantelbereich zwischen dem Boden und dem Übergangsbereich aufweist. In diesem Fall verbindet der Übergangsbereich des Zellendeckels den Boden des Zellendeckels lediglich mittelbar mit seinem Randbereich. Zwischen dem Randbereich und dem Boden ist dann der hohlzylindrische Mantelbereich angeordnet.

Alternativ hierzu kann der Übergangsbereich des Zellendeckels seinen Boden und seinen Randbereich aber auch unmittelbar verbinden. Insbesondere in diesen Fällen kann der Übergangsbereich ausgehend von dem Boden konisch aufgeweitet sein.

Die Schnittkante des Zellendeckels ist bevorzugt radial nach außen umgebogen. Hierdurch wird die oben erwähnte Gasungsunanfälligkeit erfindungsgemäßer Zink/Luft-Zellen noch verstärkt.

Viele der genannten Merkmale der erfindungsgemäßen Knopfzelle sowie aus der Erfindung resultierende Vorteile ergeben sich auch aus der nun folgenden Beschreibung der Zeichnung. Die im Folgenden beschriebenen bevorzugten Ausführungsformen dienen lediglich zur Erläuterung und zum besseren Verständnis der Erfindung und sind in keiner Weise einschränkend zu verstehen.

Fig. 1 zeigt eine teilgeschnittene schematische Darstellung einer bevorzugten Ausführungsform einer erfindungsgemäßen Zink/LuftKnopfzelle 100 sowie im Querschnitt den Zellenbecher 101 und den Zellendeckel 102 der Zelle 100.

Das Gehäuse der Knopfzelle 100 umfasst neben dem Zellenbecher 101 und dem Zellendeckel 102 auch die Dichtung 103, die den Zellenbecher 101 räumlich und elektrisch vom Zellendeckel 102 trennt.

Der Zellenbecher 101 und der Zellendeckel 102 weisen jeweils einen ringförmigen Randbereich auf, die Randbereiche 101c und 102c. Der Randbereich 101c umfasst hierbei die endständige Schnittkante 101e. Der Randbereich 102c umfasst die endständige Schnittkante 102e. Sowohl der Zellenbecher 101 als auch der Zellendeckel 102 sind einwandig ausgebildet. Weiterhin weisen der Zellenbecher 101 und der Zellendeckel 102 jeweils einen Boden auf, die Böden 101a und 102a. Die Böden 101a und 102a weisen jeweils eine kreisrunde Geometrie auf und sind parallel zueinander angeordnet.

Zwischen dem Randbereich 101c und dem hohlzylindrischen Mantelbereich 101b des Zellenbechers 101 ist der Übergangsbereich 101d in Form einer abgerundeten, kreisförmigen Kante angeordnet. Zwischen dem Randbereich 102c und dem Boden 102a des Zellendeckels 102 ist der Übergangsbereich 102d angeordnet. Dieser ist ausgehend vom Boden 102a hin zum Randbereich 102c konisch aufgeweitet.

Die Dichtung 103 ist hohlzylindrisch ausgebildet und umfasst einen hohlzylindrischen Mantel 103a, der stirnseitig durch einen oberen vom Boden 101a wegweisenden ringförmigen Dichtungsrand 103b und einen unteren in Richtung des Bodens 101a weisenden ringförmigen Dichtungsrand 103c begrenzt wird. Der obere ringförmige Dichtungsrand 103b weist einen ringförmigen Spalt 103d auf. Dieser wird von einer ringförmigen inneren Dichtlippe 103e und einer ringförmigen äußeren Dichtlippe 103f gebildet, welche den ringförmigen Spalt 103d einschließen.

Der Mantel 103a der Dichtung 103 liegt flach an der Innenseite des Mantelbereichs 101b des Zellenbechers 101 an. Der untere Dichtungsrand 103c sitzt auf dem Separator 104 auf. Innerhalb des Gehäuses sind neben dem bereits erwähnten Separator 104 die Luftkathode 105 und ein als Luftverteiler 106 dienendes poröses Vlies angeordnet. Sowohl der Separator 104 als auch die Luftkathode 105 und der Luftverteiler 106 sind als kreisrunde Scheiben ausgebildet. Sie decken eine oder mehrere Durchbrechungen im Boden 101a des Zellenbechers 101 (nicht dargestellt) ab, durch die Luftsauerstoff in den Innenraum des Gehäuses eindringen kann.

Im Bereich 101f sind der Boden 101a und der Mantelbereich 101b des Zellenbechers radial leicht eingezogen.

Der Teil des Innenraums des Gehäuses oberhalb des Separators 104 ist bei erfindungsgemäßen Zink/Luft-Knopfzellen mit einer Zink-Anode befüllt. Aus Gründen der Übersichtlichkeit ist diese Anode in Fig. 1 ebenfalls nicht dargestellt.

Der Randbereich 102c des Zellendeckels 102 ist radial nach außen umgebogen, so dass er einen freistehenden, kreisringförmigen Bereich radialer Erstreckung bildet, dessen äußerer Rand von der Schnittkante 102e gebildet wird. Der Randbereich 102c des Zellendeckels 102 ist mit der Schnittkante 102e voran in den ringförmigen Spalt 103d des oberen Dichtungsrands 103b eingeschoben. Der kreisringförmige Bereich 102c ist planar ausgebildet und schließt mit dem hohlzylindrischen Mantelbereich 101b des Zellenbechers 101 einen Winkel Θ von 90° ein.

Zum Verschluss der Zelle 100 ist der Randbereich 101c radial nach innen umgebogen. Der umgebogene Randbereich 101c drückt die ringförmige äußere Dichtlippe 103f auf den Randbereich 102c des Zellendeckels 102.

Die Höhe h der Zelle 100 wird durch den kürzesten Abstand zwischen einem Punkt auf der Außenseite des Bodens 102a des Zellendeckels 102 und einem Punkt auf der Außenseite des Bodens 101a des Zellenbechers 101 definiert. In axialer Richtung lässt sich der Teil des Gehäuses zwischen den Böden 101a und 102a von Zellenbecher 101 und Zellendeckel 102 in zwei ringförmige, endständige, einwandige Segmente h1 und h3 und ein zwischen diesen angeordnetes mittleres, ringförmiges, doppelwandiges Segment h2 unterteilen. Das doppelwandige Segment h2 wird dadurch gebildet, dass die Randbereiche 101c und 102c von Zellenbecher 101 und Zellendeckel 102 überlappen. Das doppelwandige Segment h2 beträgt weniger als 10 % der Höhe h der Zelle 100.

## Patentansprüche

1. Zink/Luft-Knopfzelle (100) umfassend ein flüssigkeitsdicht verschlossenes Gehäuse aus
• einem Zellenbecher (101),
• einem Zellendeckel (102), und
• einer Dichtung (103),
welche einen Innenraum umschließen, in dem, getrennt durch einen Separator (104), eine Zink-Anode und eine Luft-Kathode (105) angeordnet sind, wobei
• der Zellenbecher (101) einen Boden (101a), einen hohlzylindrischen Mantelbereich (101b), einen den Boden (101a) und den Mantelbereich (101b) verbindenden Übergangsbereich (101d) und einen ringförmigen, eine Öffnung definierenden Randbereich (101c) aufweist,
• der Boden (101a), der Mantelbereich (101b), der Randbereich (101c) und der Übergangsbereich (101d) des Zellenbechers (101) jeweils eine in den Innenraum weisende Innenseite und eine in die entgegengesetzte Richtung weisende Außenseite aufweisen,
• der Zellendeckel (102) einen Boden (102a), einen ringförmigen Randbereich (102c) und einen den Boden (102a) und den Randbereich (102c) verbindenden Übergangsbereich (102d) aufweist,
• der Boden (102a), der Randbereich (102c) und der Übergangsbereich (102d) des Zellendeckels (102) jeweils eine in den Innenraum weisende Innenseite und eine in die entgegengesetzte Richtung weisende Außenseite aufweisen,
• der Boden (101a) des Zellenbechers mindestens eine Durchbrechung aufweist, durch die Luftsauerstoff in den Innenraum des Gehäuses eindringen kann,
• auf der Innenseite des Bodens (102a) des Zellenbechers (102) die Luftkathode (105) und der Separator (104) in Form von dünnen Schichten angeordnet sind,
• die Dichtung (103) umfasst einen hohlzylindrischen Mantel (103a), der an der Innenseite des Mantelbereichs (101b) des Zellenbechers (101) anliegt und stirnseitig durch einen oberen, vom Boden (101a) wegweisenden ringförmigen Dichtungsrand (103b) und einen unteren, in Richtung des Bodens (101a) weisenden ringförmigen Dichtungsrand (103c) begrenzt wird, und
• der obere ringförmige Dichtungsrand (103b) einen ringförmigen Spalt (103d) aufweist,
und wobei
• der Zellendeckel (102) einschließlich des Randbereichs (102c) einwandig ausgebildet ist,
• der Randbereich (102c) eine endständige Schnittkante (102e) umfasst,
• der Randbereich (102c) des Zellendeckels (102) radial nach außen umgebogen ist, so dass er einen freistehenden, kreisringförmigen Bereich radialer Erstreckung bildet, dessen äußerer Rand von der Schnittkante (102e) gebildet wird,
• der Randbereich (102c) des Zellendeckels (102) mit der Schnittkante (102e) voran in den ringförmigen Spalt (103d) des oberen Dichtungsrands (103b) eingeschoben ist,
• der Randbereich (101c) des Zellenbechers (101) zum Verschluss der Zelle radial nach innen umgebogen ist
• das Gehäuse zwischen den Böden (101a, 102a) in axialer Richtung in zwei ringförmige, endständige, einwandige Segmente (h1, h3) und ein zwischen diesen angeordnetes mittleres, ringförmiges, doppelwandiges Segment (h2) unterteilt ist und
• das doppelwandige Segment (h2) weniger als 20 % zur Höhe der Zelle beiträgt.

2. Zelle nach Anspruch 1, **gekennzeichnet durch** mindestens eines der folgenden Merkmale:
• Der obere Dichtungsrand (103b) umfasst eine ringförmige innere Dichtlippen (103e) und eine ringförmige äußere Dichtlippe (103f), welche den ringförmigen Spalt (103d) einschlieβen.
• Der untere Dichtungsrand (103c) sitzt auf dem Boden (101a) des Zellenbechers (101) oder auf dem Separator (104) auf.

3. Zelle nach Anspruch 2, **dadurch gekennzeichnet, dass** die ringförmige äußere Dichtlippe (103f) von dem radial nach innen gebogenen Randbereich (101c) des Zellenbechers (101) auf den Randbereich (102c) des Zellendeckels (102) gedrückt wird.

4. Zelle nach einem der vorhergehenden Ansprüche **gekennzeichnet durch** mindestens eines der folgenden Merkmale:
• Der Zellendeckel (102) weist einen hohlzylindrischen Mantelbereich zwischen dem Boden (102a) und dem Übergangsbereich (102d) auf.
• Der Übergangsbereich (102d) des Zellendeckels (102) ist konisch aufgeweitet.
• Der Rand (102c) des Zellendeckels (102) ist radial nach außen umgebogen.

## Claims

1. Zinc/air button cell (100) comprising a housing which is closed in a liquid-tight fashion and is composed of
• a cell cup (101),
• a cell cover (102), and
• a seal (103),
which enclose an internal space in which a zinc anode and an air cathode (105) are arranged separated by a separator (104), wherein
• the cell cup (101) has a base (101a), a hollow-cylindrical lateral area (101b), a junction area (101d) which connects the base (101a) and the lateral area (101b), and an annular edge area (101c) which defines an opening,
• the base (101a), the lateral area (101b), the edge area (101c) and the junction area (101d) of the cell cup (101) each have an inner side which points into the interior space and an outer side which points in the opposite direction,
• the cell cover (102) has a base (102a), an annular edge area (102c) and a junction area (102d) which connects the base (102a) and the edge area (102c),
• the base (102a), the edge area (102c) and the junction area (102d) of the cell cover (102) each have an inner side which points into the interior space and an outer side which points in the opposite direction,
• the base (101a) of the cell cup has at least one breakthrough through which atmospheric oxygen can enter the interior space of the housing,
• the air cathode (105) and the separator (104) are arranged in the form of thin layers on the inner side of the base (102a) of the cell cup (102),
• the seal (103) comprises a hollow-cylindrical casing (103a) which bears against the inner side of the lateral area (101b) of the cell cup (101) and is bound over at the end face of an upper annular sealing edge (103b) pointing away from the base (101a) and a lower annular sealing edge (103c) pointing in the direction of the base (101a), and
• the upper annular sealing edge (103b) has an annular gap (103d),
and wherein
• the cell cover (102) including the edge area (102c) is embodied with a single wall,
• the edge area (102c) comprises an end cutting edge (102e),
• the edge area (102c) of the cell cover (102) is bent over radially towards the outside so that it forms a free-standing, circular-ringshaped area which has a radial extent and whose outer edge is formed by the cutting edge (102e),
• the edge area (102c) of the cell cover (102) is inserted with the cutting edge (102e) at the front into the annular gap (103d) in the upper sealing edge (103b),
• the edge area (101c) of the cell cup (101) is bent over radially inwards in order to close the cell,
• the housing is divided into two annular single-walled end segments (h1, h3) in the axial direction between the bases (101a, 102a) and into an annular, double-walled segment (h2) which is arranged centrally between said segments (h1, h3), and
• the double-walled segment (h2) contributes less than 20% to the height of the cell.

2. Cell according to Claim 1, **characterized by** at least one of the following features:
• the upper sealing edge (103b) comprises an annular inner sealing lip (103e) and an annular outer sealing lip (103f) which enclose the annular gap (103d) and
• the lower sealing edge (103c) is seated on the base (101a) of the cell cup (101) or on the separator (104).

3. Cell according to Claim 2, **characterized in that** the annular outer sealing lip (103f) is pressed by the radially inwardly bent edge area (101c) of the cell cup (101) onto the edge area (102c) of the cell cup (102) .

4. Cell according to one of the preceding claims, **characterized by** at least one of the following features:
• the cell cup (102) has a hollow-cylindrical lateral area between the base (102a) and the junction area (102d),
• the junction area (102d) of the cell cover (102) is widened conically, and
• the edge (102c) of the cell cover (102) is bent over radially outwards.

## Revendications

1. Pile bouton zinc/air (100) comprenant un boîtier fermé de manière étanche aux liquides constitué
- d'un godet de pile (101),
- d'un couvercle de pile (102), et
- d'un joint d'étanchéité (103),
qui renferment un espace interne dans lequel sont disposées une anode en zinc et une cathode à air (105) séparées par un séparateur (104),
- le godet de pile (101) présentant un fond (101a), une région d'enveloppe cylindrique creuse (101b), une région de transition (101d) reliant le fond (101a) et la région d'enveloppe (101b) et une région de bord annulaire (101c) définissant une ouverture,
- le fond (101a), la région d'enveloppe (101b), la région de bord (101c) et la région de transition (101d) du godet de pile (101) présentant à chaque fois un côté intérieur tourné dans l'espace interne et un côté extérieur tourné dans la direction opposée,
- le couvercle de pile (102) présentant un fond (102a), une région de bord annulaire (102c) et une région de transition (102d) reliant le fond (102a) et la région de bord (102c),
- le fond (102a), la région de bord (102c) et la région de transition (102d) du couvercle de pile (102) présentant à chaque fois un côté intérieur tourné dans l'espace interne et un côté extérieur tourné dans la direction opposée,
- le fond (101a) du godet de pile présentant au moins un orifice à travers lequel l'oxygène de l'air peut pénétrer dans l'espace interne du boîtier,
- la cathode à air (105) et le séparateur (104) étant disposés sous forme de couches minces sur le côté intérieur du fond (102a) du godet de pile (102),
- le joint d'étanchéité (103) comprenant une enveloppe cylindrique creuse (103a) qui s'applique contre le côté intérieur de la région d'enveloppe (101b) du godet de pile (101) et qui est limitée du côté frontal par un bord de joint d'étanchéité supérieur annulaire (103b) orienté à l'opposé du fond (101a) et un bord de joint d'étanchéité inférieur annulaire (103c) tourné dans la direction du fond (101a), et
- le bord de joint d'étanchéité supérieur annulaire (103b) présentant une fente annulaire (103d), et
- le couvercle de pile (102) y compris la région de bord (102c) étant réalisé avec une paroi simple,
- la région de bord (102c) comprenant une arête de coupe terminale (102e),
- la région de bord (102c) du couvercle de pile (102) étant recourbée radialement vers l'extérieur de telle sorte qu'elle forme une région de forme annulaire circulaire autoportante d'étendue radiale dont le bord extérieur est formé par l'arête de coupe (102e),
- la région de bord (102c) du couvercle de pile (102) étant enfoncée avec l'arête de coupe (102e) en avant dans la fente annulaire (103d) du bord de joint d'étanchéité supérieur (103b),
- la région de bord (101c) du godet de pile (101) étant recourbée radialement vers l'intérieur pour fermer la pile,
- le boîtier entre les fonds (101a, 102a) étant divisé dans la direction axiale en deux segments annulaires terminaux à paroi simple (h1, h3) et un segment annulaire central à double paroi (h2) disposé entre ceux-ci, et
- le segment à double paroi (h2) contribuant à raison de moins de 20 % à la hauteur de la pile.

2. Pile selon la revendication 1, **caractérisée par** au moins l'une des caractéristiques suivantes :
- le bord de joint d'étanchéité supérieur (103b) comprend une lèvre d'étanchéité intérieure annulaire (103e) et une lèvre d'étanchéité extérieure annulaire (103f), qui forment la fente annulaire (103d),
- le bord de joint d'étanchéité inférieur (103c) repose sur le fond (101a) du godet de pile (101) ou sur le séparateur (104).

3. Pile selon la revendication 2, **caractérisée en ce que** la lèvre d'étanchéité extérieure annulaire (103f) est pressée par la région de bord courbée radialement vers l'intérieur (101c) du godet de pile (101) contre la région de bord (102c) du couvercle de pile (102).

4. Pile selon l'une quelconque des revendications précédentes, **caractérisée par** au moins l'une des caractéristiques suivantes :
- le couvercle de pile (102) présente une région d'enveloppe cylindrique creuse entre le fond (102a) et la région de transition (102d),
- la région de transition (102d) du couvercle de pile (102) est élargie sous forme conique,
- le bord (102c) du couvercle de pile (102) est recourbé radialement vers l'extérieur.
